# EUROPEAN PATENT SPECIFICATION

(11) **EP 1 594 723 B1**
(45) Date of publication and mention of the grant of the patent: **27.12.2006**
(21) Application number: 04712721.2
(22) Date of filing: 19.02.2004
(51) Int. Cl.: B60Q 1/14, B60R 16/02

(54) **COMBINATION SWITCH MODULE**
KOMBINIERTES SCHALTMODUL
MODULE DE COMMUTATEUR MULTIPLE

(30) Priority: 20.02.2003 JP 2003043017; 04.03.2003 JP 2003057273
(43) Date of publication of application: 16.11.2005
(73) Proprietor: YAZAKI CORPORATION, Minato-ku Tokyo 108-8333 (JP)
(72) Inventor: Suzuki, Norihito, c/o Yazaki Parts Co., Ltd., Haibara-gun, Shizuoka 421-0492 (JP); Mitsui, Takahiko, c/o Yazaki Parts Co., Ltd., Haibara-gun, Shizuoka 421-0492 (JP)
(74) Representative: Harwardt, Günther
(86) International application number: PCT/JP2004/001935
(87) International publication number: WO 2004/075222

(56) References cited:
- EP-A- 0 763 447
- EP-A- 0 860 330
- DE-A- 19 756 820
- US-A- 5 895 899

## Description

### Technical Field

This invention relates to a combination switch module for use in transmitting electrical signals which are generated by a turn switch unit such as a turn signal lever and a wiper lever, and by a steering angle sensor, and electrical signals flowing through a spiral cable by multiplex communication.

### Background Art

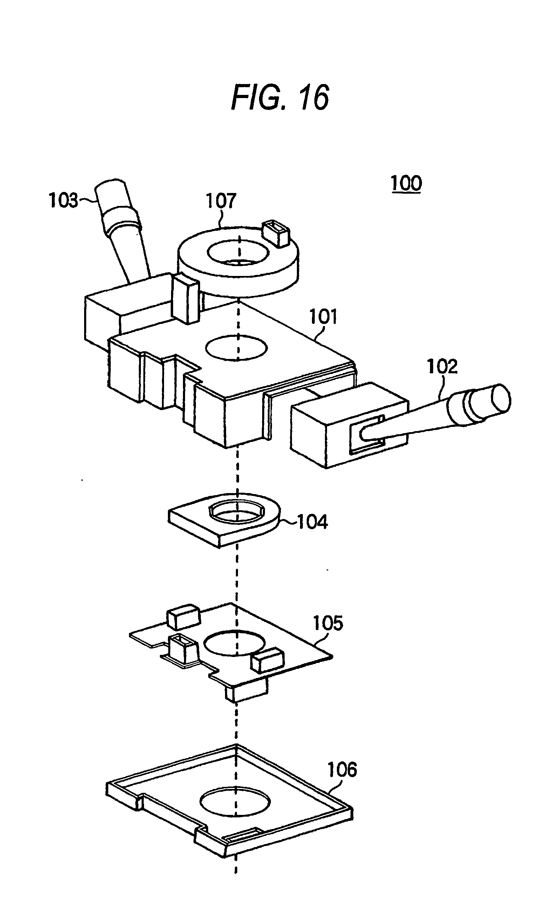

A combination switch module 100 shown in FIGS. 16 to 20 as a related combination switch unit includes a body 101, a turn lever unit 102, a wiper lever unit 103, a steering angle sensor 104, an ECU board 105, a combination switch cover 106, and a spiral cable 107.

The turn lever unit 102 and the wiper lever unit 103 are assembled to the body 101 from sides thereof. The steering angle sensor 104 and the ECU board 105 are assembled in the body 101 from an open-side bottom thereof in this order. Then, the combination switch cover 106 is assembled to the bottom of the body 101. The spiral cable 107 is assembled to the top of the body 101.

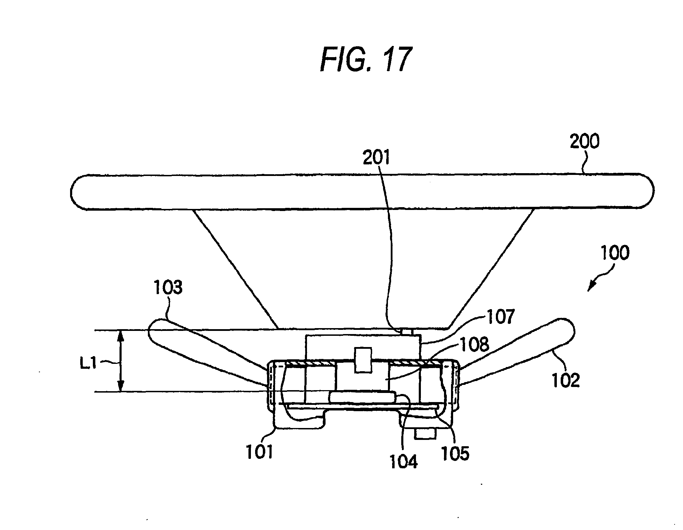

As shown in FIG. 17, power is transmitted to the steering angle sensor 104 through a cylindrical power transmitting member 108 connected to a rotation-driving pin 201 of a steering wheel 200. Thus, a distance from the steering angle sensor 104 to the steering wheel 200 is set to be L1.

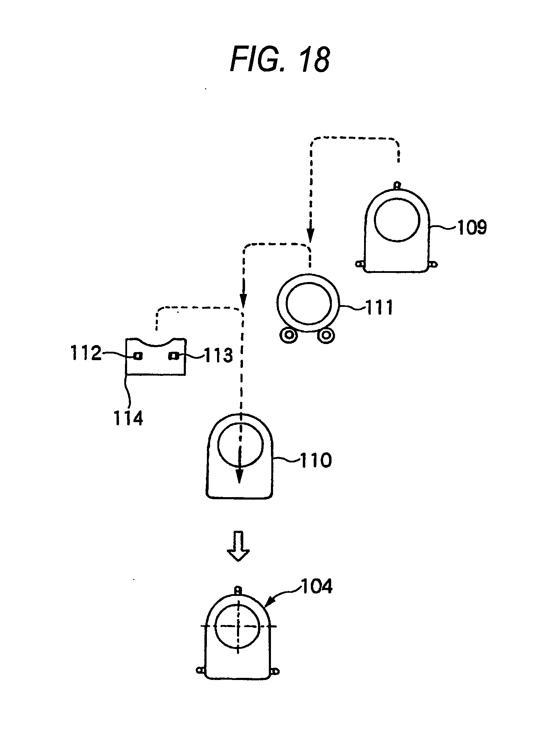

As shown in FIG. 18, the steering angle sensor 104 accommodates, between an upper case 109 and a lower case 110, a detection object mechanism portion 111 and a circuit board 114 on which a first sensing circuit portion 112 and a second sensing circuit portion 113 are mounted.

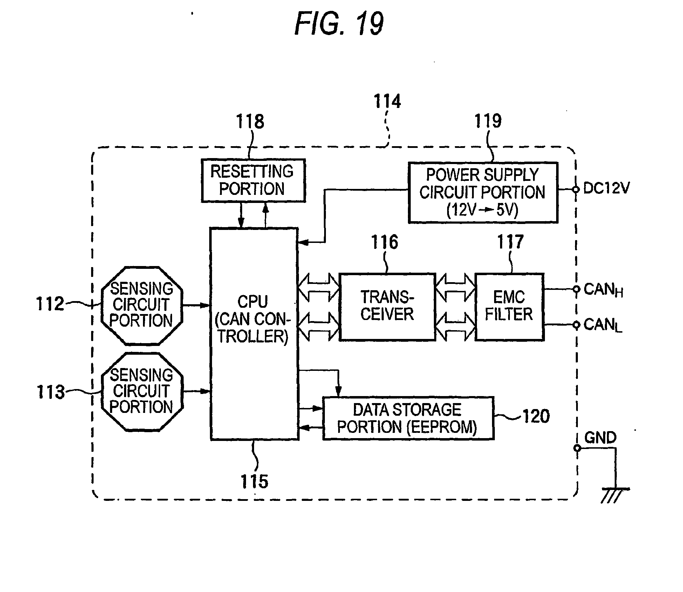

As shown in FIG. 19, a steering angle CPU portion (CPU (CAN controller)) 115 which receives electrical signal generated by the first and second sensing circuit portions 112 and 113 through the detection object mechanism portion 111 based on rotation of a steering shaft and performs angle computation, and a steering multiplex communication portion (CAN transceiver) 116 which receives electrical signals from the steering angle CPU portion 115 and which multiplex communicates steering information with an external system, are provided on the circuit board 114 of the steering angle sensor 104. An EMC filter 117 which receives electrical signals from the steering multiplex communication portion 116, output terminals CAN_{H} and CAN_{L} for outputting electrical signals noise-processed by the EMC filter 117, a resetting portion 118, a power supply circuit portion 119, and a steering angle data storage portion 120 for storing data when no power is supplied are provided thereon.

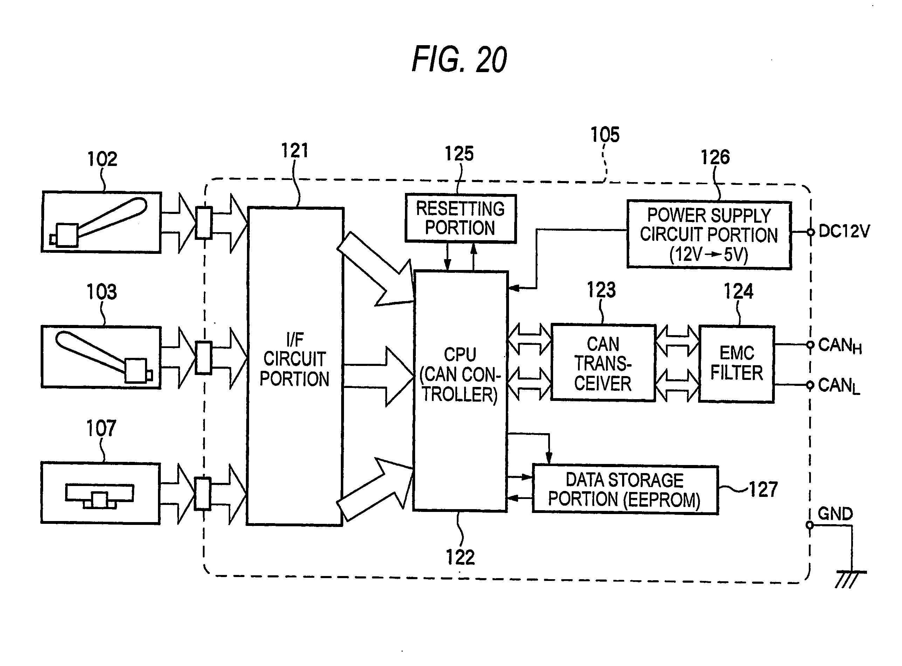

As shown in FIG. 20, an interface circuit portion (I/F circuit portion) 121 which receives electrical signals generated by the turn lever unit 102, electrical signals generated by the wiper lever unit 103 and electrical signals flowing through the spiral cable 107, and a multiplex communication control unit (CPU (CAN controller)) which receives electrical signals from the interface circuit portion 121 and performs computation on information, are provided on the ECU board 105. A multiplex communication portion (CAN transceiver) 123 which receives electrical signals from a multiplex communication control unit 122 and which performs transmission and reception through multiplex communication with an external system; an EMC filter 124 which receives electrical signals from the multiplex communication portion 123; output terminals CAN_{H} and CAN_{L} for outputting electrical signals noise-processed by the EMC filter 124; a resetting portion 125; a power supply circuit portion 126; and a data storage portion 127 for storing transmission and reception data are provided thereon.

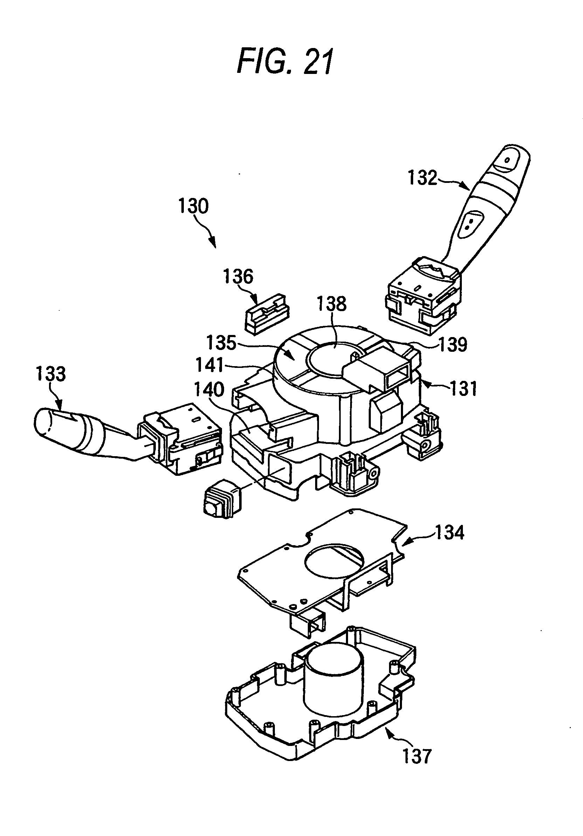

Further, a combination switch module 130 shown in FIG. 21 as another example of the configuration of a combination switch module includes: a body 131 through which a steering shaft passes; a first lever switch 132 and a second lever switch 133 assembled to the body 131; a circuit board 134 incorporated into the body 131 and provided with an electronic control unit mounted thereon; a rotary connector 135 provided at a passenger-room-side part of the body 131; and a steering angle sensor 136, provided at a side portion of the body 131, for converting into electrical signals. The combination switch module 130 includes a cover 137, attached to an engine-room-side part of the body 131, for covering the circuit board 134. the body 131 includes a steering-shaft passing portion 138 formed in a central part thereof, a first assembly accommodating portion 139, a second assembly accommodating portion 140, and a rotary connector accommodating portion 141 formed at a passenger-compartment-side part thereof (see, for example, JP-A-2000-159036).

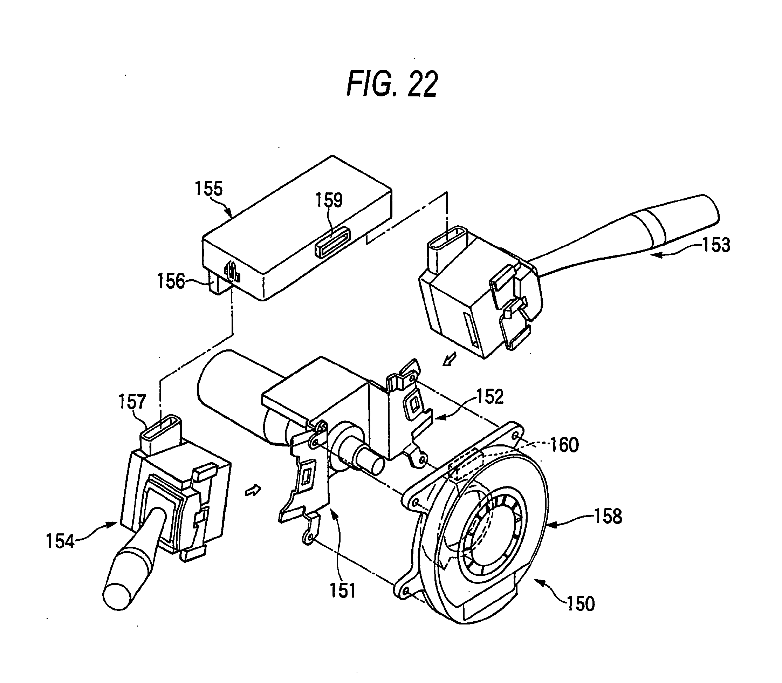

Furthermore, in a combination switch module 150 shown in FIG. 22 as another example of the configuration of a combination switch module, a turn lever unit 153 is attached to one of support plate portions 152 of a bracket 151. Moreover, a wiper lever unit 154 is attached to the other plate portion 152. A fixed connector 156 of a multiplex communication unit 155 is fitted into a receiving connector 157. Further, a spiral cable unit 158 is attached to the multiplex communication unit 155 by fitting a receiving connector to a fixed connector 159 thereof (see, for instance, JP-A-11-134973).

US 5,895,899 discloses a combination switch device having a body incorporation bus bars therein, the body being provided with a turn lever switch and a wiper lever switch releasably attached and electrically conducted to the body. A control unit controlling operation of the lever switch is connected to the bus bars and incorporated in the wiper lever switch.

However, recent combination switch modules have been demanded to be miniaturized, despite of increase in switch functions thereof and in the number of circuits connected to the spiral cable thereof. Each of the combination switch modules described in aforementioned first and second patent documents has a problem in that it is difficult to ensure a space needed for attaching the steering angle sensor thereto.

Additionally, along with demands for higher functionality of a steering angle sensor, the circuit size thereof has been on the rise. Consequently, the conventional combination switch module has fallen into a situation where it is more difficult to attach a steering angle sensor thereto. Moreover, achievement of higher functionality thereof has caused a cost problem.

### Summary of the Invention

The invention is accomplished to solve the problems. An obj ect of the invention is to provide a combination switch module enabled to reduce the overall size and cost thereof by eliminating redundant electronic components to thereby miniaturize or omit a circuit board in a steering angle sensor.

In order to solve the aforesaid object, the invention is characterized by having the following arrangement.
Aspect 1. A combination switch module comprising:
a body through which a steering shaft penetrates;
a lever switch unit assembled to the body;
a spiral cable body incorporating a spiral cable assembled to the body;
a steering angle sensor including a case and a detection object mechanism portion adapted to rotate in synchronization with rotation of the steering shaft which are accommodated in the case;
a sensing circuit portion for converting a rotation of the detection object mechanism portion into an electric signals; and
an ECU board including,
   a multiplex communication control unit which performs computation processing on information sent from the lever switch unit and from the spiral cable and functions as a steering angle CPU portion for performing angle computation based on the electric signal output from the sensing circuit portion,
   a multiplex communication portion which performs transmission of information to and reception of information from an external system and functions as a steering multiplex communication portion for communicating steering information with the external system by multiplex communication, and
   a data storage portion which stores data for the transmission and data obtained by the reception and functions as a steering angle data storage portion for storing data when electric power is not supplied.

Aspect 2. The combination switch module according to the aspect 1, wherein the sensing circuit portion is formed on a circuit board accommodated in the case.

Aspect 3. The combination switch module according to the aspect 2, wherein the case includes upper and lower case which accommodate the detection object mechanism portion and the circuit board.

Aspect 4. The combination switch module according to the aspect 1, wherein the case accommodates the detection object mechanism portion only.

Aspect 5. The combination switch module according to the aspect 4, wherein the sensing circuit portion is formed on the ECU board.

Aspect 6. The combination switch module according to the aspect 4, wherein the detection object mechanism portion is attached to the ECU board through the case by screwing or snap-fitting.

Aspect 7. The combination switch module according to the aspect 4, wherein the case is interposed between the spiral cable body and the ECU board.

Aspect 8. The combination switch module according to the aspect 1, wherein the spiral cable body has a function of covering an opening of the body.

### Brief Description of Drawings

FIG. 1 is an external perspective view illustrating the assembly relation among components of a combination switchmodule according to a first embodiment of the invention.
FIG. 2 is an explanatory view illustrating the assembly of components of a steering angle sensor used in the combination switch module shown in FIG. 1.
FIG. 3 is a circuit block view illustrating a circuit board of the steering angle sensor shown in FIG. 2.
FIG. 4 is a circuit block view illustrating an ECU board of the combination switch module shown in FIG. 1.
FIG. 5 is an external perspective view illustrating the assembly relation among components of a combination switchmodule according to a second embodiment of the invention.
FIG. 6 is an explanatory view illustrating the assembly of components of a steering angle sensor used in the combination switch module shown in FIG. 5.
FIG. 7 is a circuit block view illustrating an ECU board of the combination switch module shown in FIG. 5.
FIG. 8 is an external perspective view illustrating the assembly relation among components of a combination switchmodule according to a third embodiment of the invention.
FIG. 9 is an explanatory view illustrating the assembly of components of a steering angle sensor used in the combination switch module shown in FIG. 8.
FIG. 10 is an explanatory view illustrating the assembly of components of a steering angle sensor used in the combination switch module according to a fourth embodiment of the invention.
FIG. 11 is an explanatory view illustrating the assembly of components of a steering angle sensor used in the combination switch module according to a fifth embodiment of the invention.
FIG. 12 is an external perspective view illustrating the assembly relation among components of a combination switchmodule according to a sixth embodiment of the invention.
FIG. 13 is a partly broken front view illustrating the assembly relation between the combination switch module shown in FIG. 12 and a steering wheel.
FIG. 14 is an explanatory view illustrating the assembly of components of a steering angle sensor used in the combination switch module shown in FIG. 12.
FIG. 15 is a circuit block view illustrating an ECU board of the combination switch module shown in FIG. 12.
FIG. 16 is an external view illustrating a conventional combination switch module.
FIG. 17 is a partly broken front view illustrating the assembly relation between the combination switch module shown in FIG. 16 and a steering wheel.
FIG. 18 is an explanatory view illustrating the assembly of components of a steering angle sensor used in the conventional combination switch module shown in FIG. 16.
FIG. 19 is a circuit block view illustrating a circuit board in the steering angle sensor used in the conventional combination switch module shown in FIG. 16.
FIG. 20 is a circuit block view illustrating an ECU board in the steering angle sensor used in the combination switchmodule shown in FIG. 16.
FIG. 21 is an explanatory view illustrating the assembly of components of a conventional combination switch module, which differs from that of FIG. 16.
FIG. 22 is an explanatory view illustrating the assembly of components of a combination switch module of a structure, which differs from that shown in FIG. 16.

### Best Mode for Carrying out the Invention

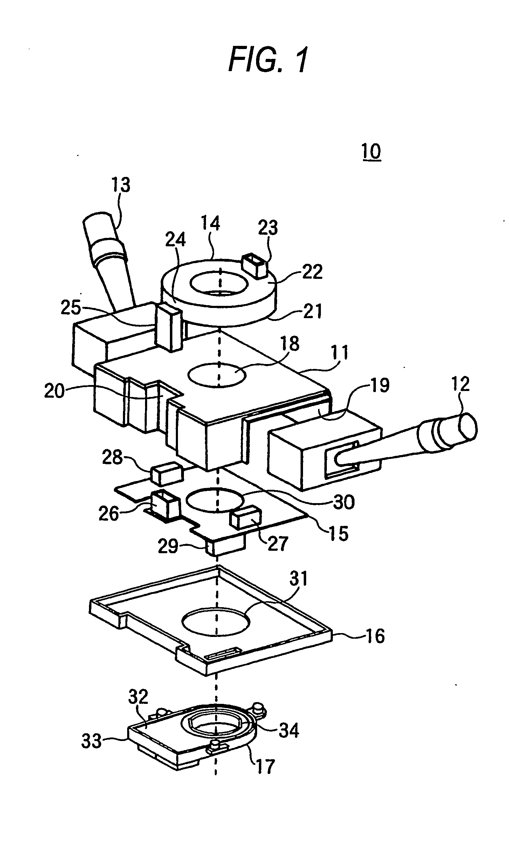

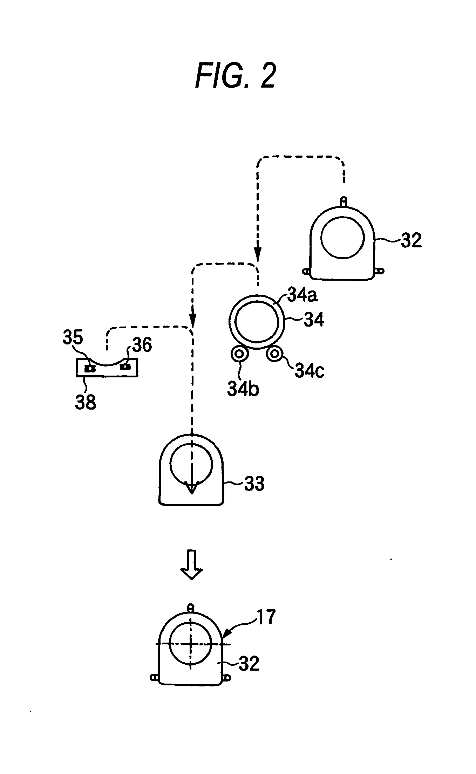

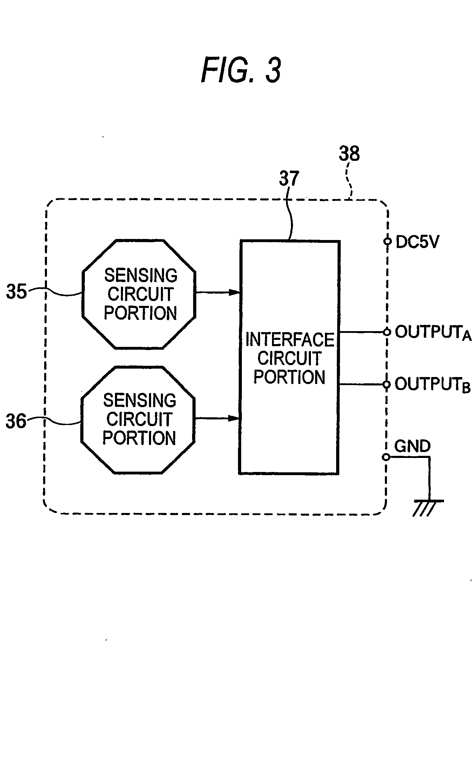

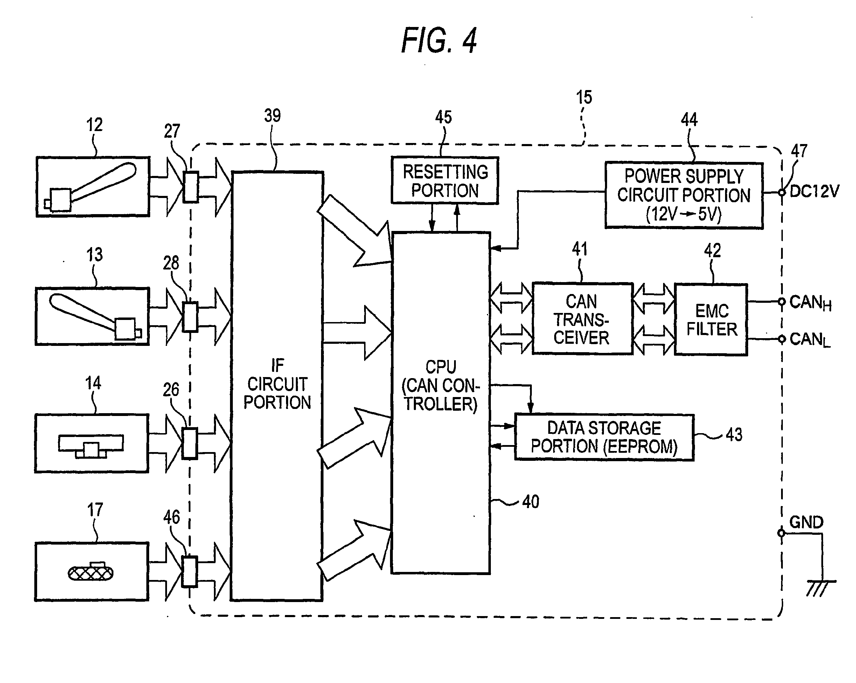

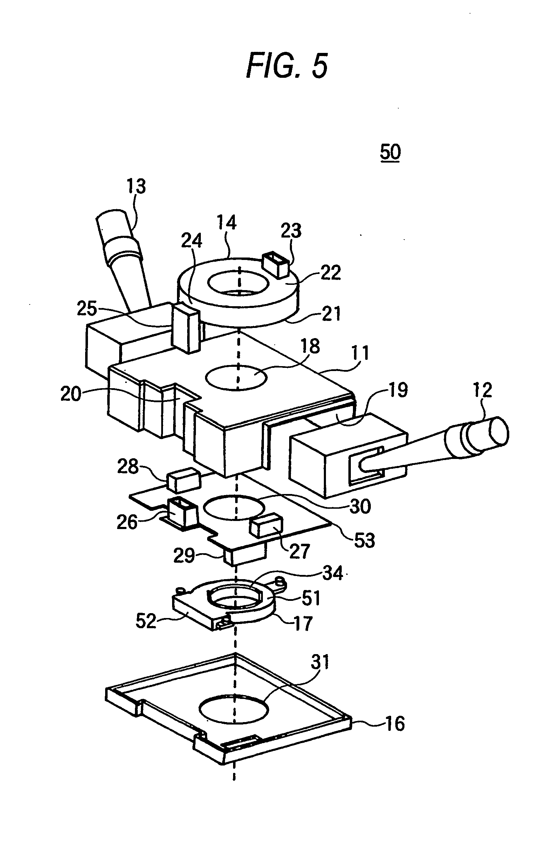

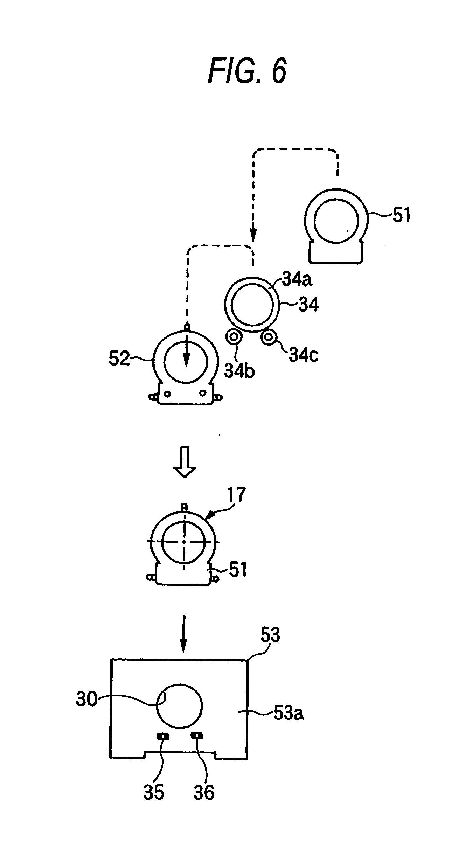

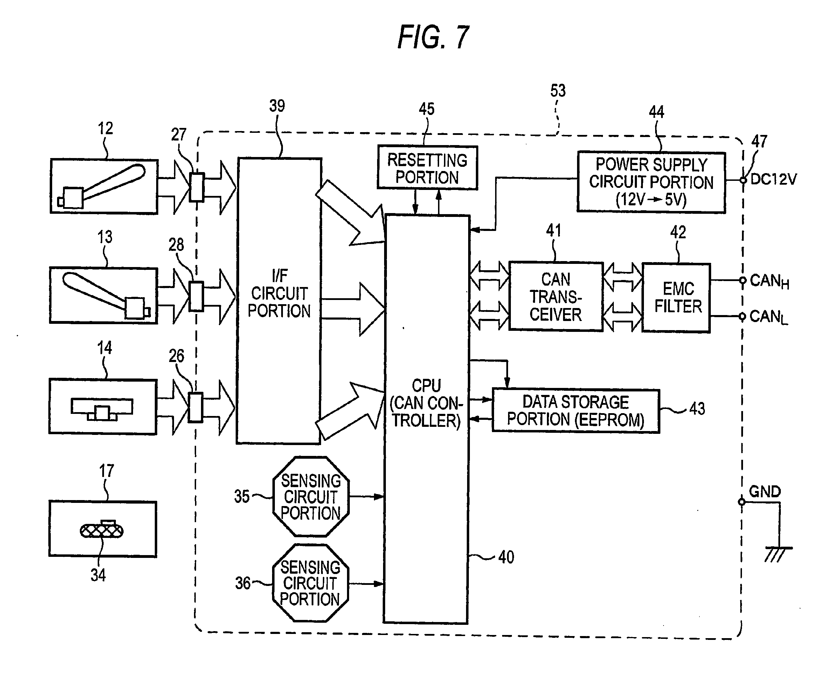

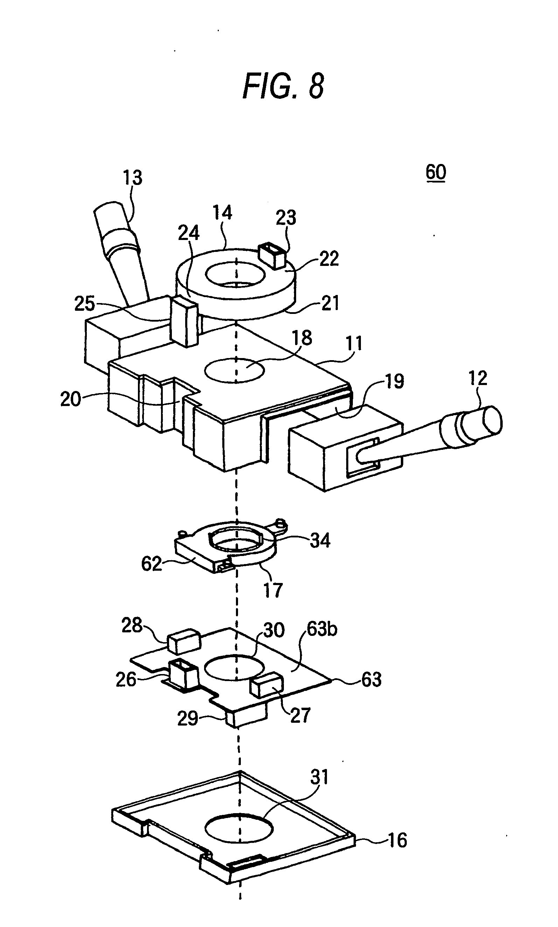

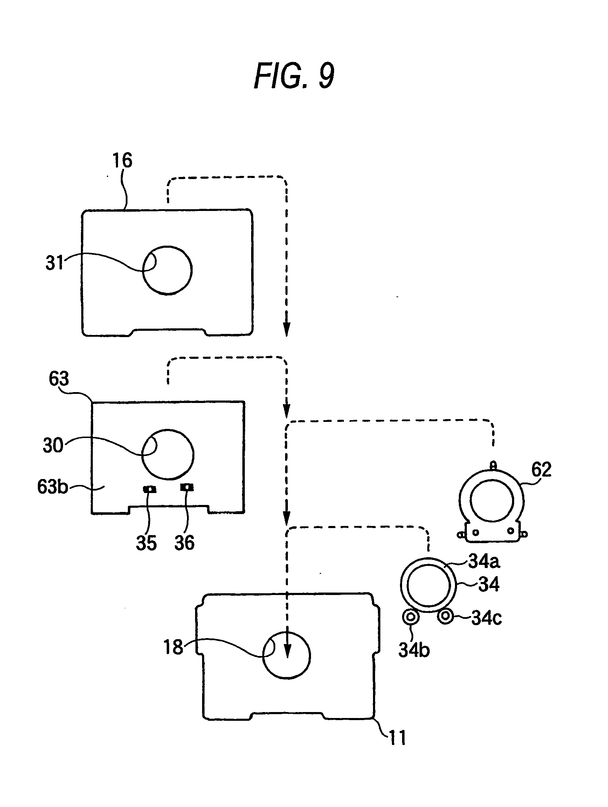

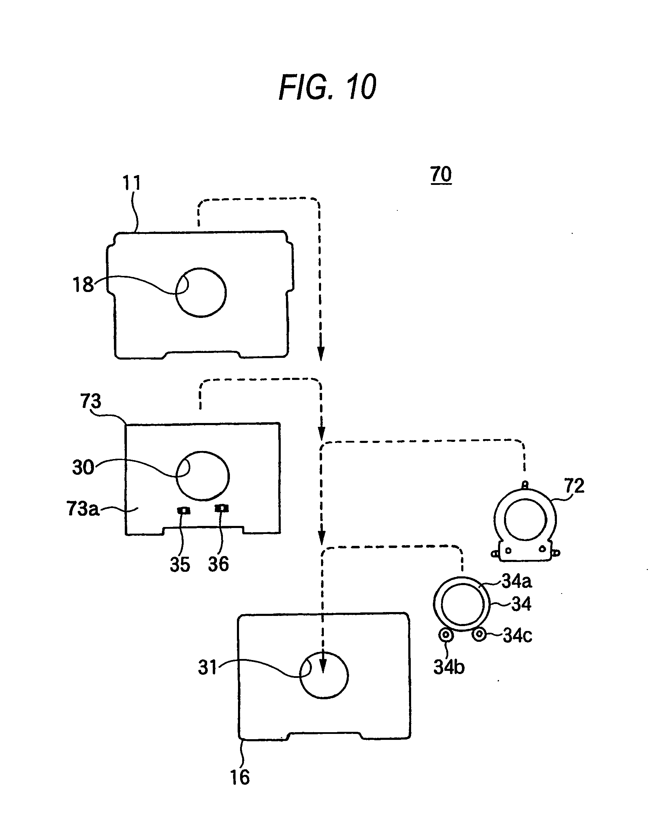

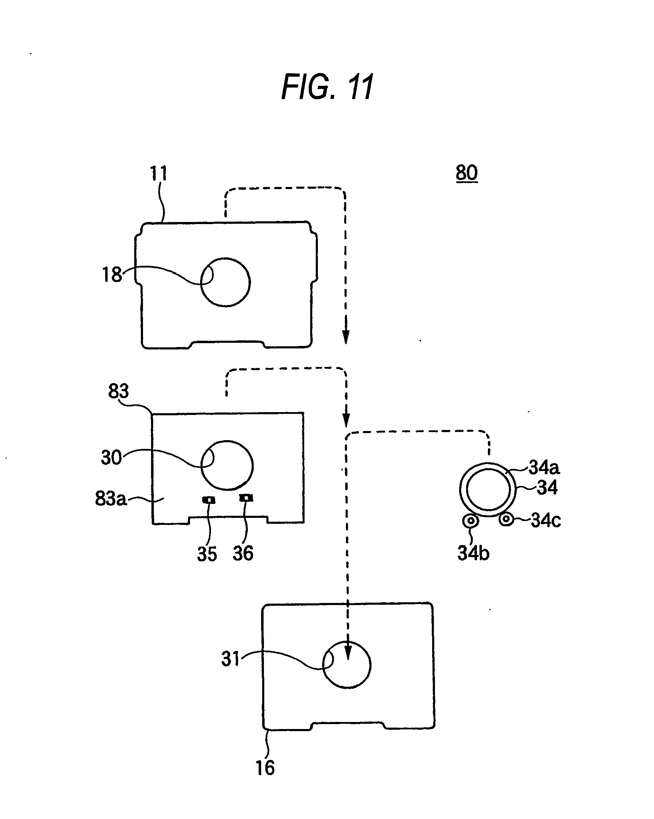

Hereinafter, a combination switch module according to an embodiment of the invention will be described in detail with reference to FIGS. 1 to 11. FIG. 1 is an external perspective view illustrating the assembly relation among components of a combination switch module according to a first embodiment of the invention. FIG. 2 is an explanatory view illustrating the assembly of components of a steering angle sensor used in the combination switch module shown in FIG. 1. FIG. 3 is a circuit block view illustrating a circuit board of the steering angle sensor shown in FIG. 2. FIG. 4 is a circuit block view illustrating an ECU board of the combination switch module shown in FIG. 1. Further, FIG. 5 is an external perspective view illustrating the assembly relation among components of a combination switch module according to a second embodiment of the invention. FIG. 6 is an explanatory view illustrating the assembly of components of a steering angle sensor used in the combination switch module shown in FIG. 5. FIG. 7 is a circuit block view illustrating an ECU board of the combination switch module shown in FIG. 5. Furthermore, FIG. 8 is an external perspective view illustrating the assembly relation among components of a combination switch module according to a third embodiment of the invention. FIG. 9 is an explanatory view illustrating the assembly of components of a steering angle sensor used in the combination switch module shown in FIG. 8. Moreover, FIG. 10 is an explanatory view illustrating the assembly of components of a steering angle sensor used in the combination switch module according to a fourth embodiment of the invention. FIG. 11 is an explanatory view illustrating the assembly of components of a steering angle sensor used in the combination switch module according to a fifth embodiment of the invention. Incidentally, each of members and the like of the second and succeeding embodiments, which has a constitution and effects similar to those of an already described member, is designated in the drawings by a same or corresponding reference character assigned to the already described member.

### First Embodiment

As shown in FIG. 1, a combination switch module 10 according to the first embodiment of the invention comprises a body 11, a turn lever unit 12, a wiper lever unit 13, a spiral cable 14, an ECU board 15, a combination switch cover 16, and a steering angle sensor 17.

The body 11 includes a steering-shaft passing portion 18, provided in a central part thereof, for allowing a steering shaft to passing therethrough. The body 11 includes a first attaching portion 19 for attaching the turn lever unit 12 thereto, and a second attaching portion (not shown) for attaching the wiper lever unit 13, which are provided at opposite side portions thereof, respectively. The body 11 includes a connector positioning concave portion 20 provided at a leftward front side thereof, as viewed in FIG. 1. The body 11 is fixed to a steering column portion (not shown). The exterior of the body 11 is covered with a column shell (not shown).

The turn lever unit 12 is a unit for controlling a lighting system including a turn signal switch, a lighting switch, a passing switch, a dimmer switch and so on. The turn lever unit 12 is attached to the first attaching portion 19 of the body 11, and connected to a second connector 27 on the ECU board 15.

The wiper lever unit 13 is a unit for controlling a wiping/washing system including a front wiper switch, a front washer switch, a rear wiper switch, a rear washer switch and so on. The wiper lever unit 13 is attached to the second attaching portion of the body 11, and connected to a third connector 28 on the ECU board 15.

The spiral cable 14 accommodates a flexible conductive member (not shown) in a spiral cable body 21 thereof. The flexible conductive member is vorticosely formed. An end portion of the spiral cable 14, which is connected to a steering wheel, is disposed in a rotating-side connector 23 placed on a rotating disk 22, while the other end portion thereof, which is connected to the ECU board 15, is disposed in a non-rotating-side connector 25 placed on a non-rotating portion 24. The connector positioning concave portion 20 positions the non-rotating-side connector 25 and prevent it from rotating. Electrical signals transmitted from an airbag sensor unit to a driver seat airbag module, electric signals sent from an audio switch provided on the steering wheel, and electric signals sent from a constant-speed running apparatus switch also provided thereon flow through the flexible conductive member.

The ECU board 15 includes a first connector 26 to which the non-rotating-side connector 25 of the spiral cable 14 is fitted, the second connector 27 to which the turn lever unit 12 is fitted, the third connector 28 to which the wiper lever unit 13 is fitted, and a single fourth connector 29 to which a connector serving as a general connector for external connection and being electrically connected to the combination switch module 10 is connected. A hole portion 30 associated with the steering shaft passing portion 18 of the body 11 is formed in a central portion of the ECU board 15. The ECU board 15 is accommodated in the body 11 by assembling the combination switch cover 16 and fixed to a lower portion of the body 11. A hole portion 31 associated with the steering shaft passing portion 18 of the body 11 is formed in a central portion of the combination switch cover 16.

The steering angle sensor 17 accommodates a detection object mechanism portion 34, a first sensing circuit portion (shown in FIG. 2) 35, a second sensing circuit portion (shown in FIG. 2) 36, an I/Fcircuit portion (an interface circuit portion 37 (shown in FIG. 3)) and a circuit board (shown in FIG. 2) 38 between an upper case 32 and a lower case 33 thereof. The steering angle sensor 17 is adapted so that the detection object mechanism portion 34 rotates in synchronization with rotation of the steering shaft, that thus, the first sensing circuit portion 35 and the second sensing circuit portion 36 convert a rotation angle of the steering wheel into an electrical signal, and that the converted electrical signal is outputted through the I/F circuit portion 37.

As shown in FIG. 2, the steering angle sensor 17 is configured so that the detection object mechanism portion 34 is assembled onto the lower case 33 to which the upper case 32 is attached, that thus, the detection object mechanism portion 34 and the circuit board 38 are integrally accommodated therein, and that the upper case 32 and the lower case 33 are attached to the combination switch cover 16 by screwing or snap-fitting. The detection object mechanism portion 34 comprises a main gear 34a, and two magnet-equipped sub-gears 34b and 34c. The first sensing circuit portion 35 and the second sensing circuit portion 36 are placed in a pair on the circuit board 38.

As shown in FIG. 3, the I/F circuit portion 37 is placed on the circuit board 38 of the steering angle sensor 17, in addition to the first sensing circuit 35 and the second sensing circuit 36. The first sensing circuit portion 35 generates a first steering angle signal by utilizing a magnetic force produced during rotation of one of the magnet-equipped sub-gears 34b of the detection object mechanism portion 34. The first steering angle signal is converted through the I/F circuit portion 37, and the converted first steering angle signal is outputted from a first output terminal OUTPUT_{A}. The second sensing circuit portion 36 generates a second steering angle signal by utilizing a magnetic force produced during rotation of the other magnet-equipped sub-gear 34c of the detection object mechanism portion 34. The second steering angle signal is converted through the I/F circuit portion 37, and the converted first steering angle signal is outputted from a second output terminal OUTPUT_{B}. Electronic components conventionally provided on the circuit board 38 of the steering angle sensor 17, such as a steering angle CPU portion (corresponding to the steering angle CPU portion 115 shown in FIG. 19), a steering multiplex communication portion (corresponding to the steering multiplex communication portion 116 shown in FIG. 19), and a steering angle data storage portion (corresponding to the steering angle data storage portion 120 shown in FIG. 19), are omitted from those to be provided on the circuit board 38. Therefore, the steering angle sensor 17 has an outer shape, which is far smaller than that of the conventional one.

As shown in FIG. 4, an I/F circuit portion (interface circuit portion) 39, a multiplex communication control unit (CPU (CAN controller)) 40, a multiplex communication portion (CAN transceiver) 41, an EMC filter 42, a data storage portion 43, a power supply circuit portion 44, and a resetting portion 45 are placed on the ECU board 15.

Electrical signals sent through the second connector 27 from the turn lever unit 12, electrical signals sent through the third connector 28 from the wiper lever unit 13, electrical signal flowing in the spiral cable 14 through the first connector 26, and a first steering angle signal and a second steering angle signal respectively outputted from the first output terminal OUTPUT_{A} and the second output terminal OUTPUT_{B} through the steering angle sensor connector 46 are inputted to the I/F circuit portion 39, which performs conversion processing on each of the electrical signals and outputs the converted electrical signals.

The multiplex communication control unit 40 performs computation on electrical signals supplied from the turn lever unit 12 thereto and processes the electrical signals into information signals and transmits the information signals to the multiplex communication portion 41. Also, the multiplex communication control unit 40 performs computation on electrical signals supplied from the wiper lever unit 13 thereto and processes the electrical signals into information signals, and transmits the information signals to the multiplex communication portion 41. The multiplex communication control unit 40 performs computation on electrical signals, which flow through the spiral cable 14, and processes the electrical signals into information signals, and transmits the information signals to the multiplex communication portion 41. Furthermore, the multiplex communication control unit 40 functions as the steering angle CPU portion that performs computation on a first steering angle signal and a second steering angle signal respectively outputted from the first output terminal OUTPUT_{A} and the second output terminal OUTPUT_{B}, that processes the first and second steering angle signals into information signals, and that transmits the information signals to the multiplex communication portion 41.

The multiplex communication portion 41 performs transmission or reception of information signals corresponding to the turn lever unit, information signals corresponding to the wiper lever unit 13, information signals corresponding to the spiral cable 14, which are supplied from the multiplex communication control unit 40, to or from an external system by utilizing (Controller Area Network) multiplex communication. The multiplex communication portion 41 functions as a steering multiplex communication portion for performing transmission or reception of a first steering angle information signal and a second steering angle information signal, which are supplied from the multiplex communication control unit 40, to or from an external system.

The EMCfilter42 is an electromagnetic compatibility filter and performs radiation noise prevention processing on each digitalized information signal to be transmitted from the multiplex communication portion 41. The information signals processed by the EMC filter 42 are transmitted from and received at a first output terminal CAN_{H} and a second output terminal CAN_{L} by multiplex communication.

The data storage portion 43 is a nonvolatile semiconductor memory (EEPROM) and holds and stores operation parameters, communication information and the like, which are represented by an information signal corresponding to the turn lever unit 12, an information signal corresponding to the wiper lever unit 13, and an information signal corresponding to a spiral cable 14, when no electric power is supplied. Furthermore, the data storage portion 43 functions as a steering angle data storage portion for temporarily holding and storing first and second steering angle information signals when a no power supply state occurs during the first and second steering angle information signals, which are sent from the steering angle sensor 17, are processed.

The power supply circuit portion 44 regulates a DC voltage of 12 V, which is supplied from the power supply or an ignition terminal, to a voltage of 5 V for driving the multiplex communication control unit 40.

The resetting portion 45 monitors whether or not a runaway of the multiplex communication control unit 40 occurs, and whether or not a low-voltage condition of the power supply occurs. If necessary, the resetting portion 45 resets the multiplex communication control unit 40.

According to the combination switch module 10 according to the first embodiment, the steering angle CPU portion, which has conventionally been used in the steering angle sensor 17, for performing angle computation on outputs of the first sensing circuit portion 35 and the second sensing circuit portion 36, the steering multiplex communication portion, which has also conventionally been used therein, for communicating steering information with an external system by multiplex communication, and the steering angle data storage portion, which has also conventionally been used therein, for storing data when no power is supplied are formed in the multiplex communication control unit 40, the multiplex communication portion 41, and the data storage portion 43 provided on the ECU board 15, respectively.

Therefore, each of the multiplex communication control unit 40, the multiplex communication portion 41, and the data storage portion 43, which are provided on the ECU board 15, is also used as a corresponding one of the steering angle CPU portion, the steering multiplex communication portion, and the steering angle data storage portion, which have conventionally been placed on the circuit board of the steering angle sensor. Thus, redundant electronic components are reduced. Hence, the structure of the steering angle sensor 17 is simplified and the miniaturization thereof is achieved by miniaturizing the circuit board 38 accommodated between the upper case 32 and the lower case 33 in the steering angle sensor 17. Consequently, the size and cost of the entire combination switch module 10 can be reduced. Further, a wire harness, which has conventionally been connected directly to the steering angle sensor 17, is omitted, so that only a wire harness connected to a steering angle sensor connector 46 provided on the ECU board 14 is still used. Thus, workability at the time of connecting the wire harness thereto can also be enhanced.

### Second Embodiment

Next, a combination switch module according to the second embodiment of the invention will be described with reference to FIGS. 5 to 7.

As shown in FIG. 5, a combination switch module 50 according to the second embodiment is adapted so that a steering angle sensor 17 has an upper case 51 and a lower case 52, between which only a detection object mechanism portion 34 is accommodated.

As shown in FIG. 6, a first sensing circuit portion 35 and a second sensing circuit portion 36 are placed on a bottom 53a of an ECU board 53. The steering angle sensor 17 is adapted so that the detection object mechanism portion 34 accommodated between the dedicated upper case 51 and the dedicated lower case 52 is rotatably attached to the bottom 53a by screwing or snap-fitting, and that a combination switch cover 16 is assembled to a lower portion of a body 11. The first sensing circuit portion 35 and the second sensing circuit portion 36 are respectively placed in a pair on both sides of a hole portion 30 allowing a steering shaft to penetrate therethrough.

As shown in FIG. 7, the first sensing circuit portion 35 and the second sensing circuit portion 36 generate first and second steering angle signals, respectively, according to rotation of the detection object mechanism portion 34, which is accommodated between the dedicated upper case 51 and the dedicated lower case 52. Further, a multiplex communication control unit 40 functions as a steering angle CPU portion for performing computation on the first and second steering angle signals respectively supplied from the first sensing circuit portion 35 and the second sensing circuit portion 36 of the steering angle sensor 17, for then processing the steering angle signals into information signals, and for transmitting the information signals to the multiplex communication portion 41. Furthermore, a multiplex communication portion 41 functions as a steering multiplex communication portion for performing transmission or reception of a first steering angle information signal and a second steering angle information signal, which are supplied from the multiplex communication control unit 40, to or from an external system. Moreover, a data storage portion 43 functions as a steering angle data storage portion for temporarily holding and storing first and second steering angle information signals supplied from the steering angle sensor 17, when a no-power supply state occurs during the first and second steering angle information signals, which are sent from the steering angle sensor 17, are processed.

According to the combination switch module 50 of the second embodiment, in the steering angle sensor 17 accommodated between the dedicated upper case 51 and the dedicated lower case 52, the steering angle CPU portion for performing angle computation on outputs of the first sensing circuit portion 35 and the second sensing circuit portion 36, the steering multiplex communication portion for communicating steering information with an external system by multiplex communication, and the steering angle data storage portion for storing data when no power is supplied are formed in the multiplex communication control unit 40, the multiplex communication portion 41, and the data storage portion 43 provided on the ECU board 15, respectively. The first sensing circuit portion 35and the second sensing circuit portion 36, which electrically convert rotation of the detection object mechanism portion 34, are also provided on the ECU board 53. The detection object mechanism portion 34 attached to the ECU board 15 by screwing or snap-fitting is used in the steering angle sensor 17.

Therefore, each of the multiplex communication control unit 40, the multiplex communication portion 41, and the data storage portion 43, which are provided on the ECU board 53, is also used as a corresponding one of the steering angle CPU portion, the steeringmultiplex communication portion, and the steering angle data storage portion, which have conventionally been placed on the circuit board of the steering angle sensor. Moreover, the first sensing circuit portion 35 and the second sensing circuit portion 36 are also provided on the ECU board 53. Thus, redundant electronic components are reduced. Hence, the structure of the steering angle sensor 17 is simplified and the miniaturization thereof is achieved by omitting the circuit board of the steering angle sensor 17. Consequently, the size and cost of the entire combination switch module 10 can be reduced. Further, a wire harness, which has conventionally been connected directly to the steering angle sensor, is omitted. A wire harness connected to the ECU board 15 can be used in common. Thus, workability at the time of connecting the wire harness thereto can also be enhanced. Additionally, the detection object mechanism portion 34 is attached directly to the ECU board 53 without using the circuit board conventionally provided in the steering angle sensor. Consequently, the upper case 51 and the lower case 52, which are exclusively used for the steering angle sensor 17, can be miniaturized.

### Third Embodiment

Next, a combination switch module according to the third embodiment of the invention is described by referring to FIGS. 8 and 9.

As shown in FIG. 8, a combination switch module 60 according to the third embodiment is adapted so that a steering angle sensor 17 has a dedicated case 62 that accommodates only a detection object mechanism 34, which is rotatably attached through the dedicated case 62 to a top 63b of an ECU board 63 by screwing or snap-fitting.

As shown in FIG. 9, in the combination switch module 60 according to the third embodiment, the first sensing circuit portion 35 and the second sensing circuit portion 36 are placed on a top 63b of an ECU board 63. The detection object mechanism portion 34 accommodated in the dedicated case 62 is assembled to the top 63b of the ECU board 63. A combination switch cover 16 is assembled to a body 11 from below the ECU board 63.

In this case, first and second steering angle signals, which the first sensing circuit portion 35 and the second sensing circuit portion 36 generate according to rotation of the detection object mechanism portion 34 of the steering angle sensor 17, are processed, similarly to those in the second embodiment.

### Fourth Embodiment

Next, a combination switch module according to the fourth embodiment of the invention is described by referring to FIG. 10.

As shown in FIG. 10, a steering angle sensor 17 used in a combination switch module 70 according to the fourth embodiment has a dedicated case 72 that accommodates only a detection object mechanism 34. A first sensing circuit 35 and a second sensing circuit 36 are placed on a bottom 73a of an ECU board 73. The detection object mechanism 34 is rotatably attached through the dedicated case 72 to the bottom 73a of the ECU board 73 by screwing or snap-fitting.

In the combination switch module 70 according to the fourth embodiment, the detection object mechanism portion 34 is accommodated in the dedicated case 72, which is assembled to the bottom 73a of the ECU board 73. An assembly of the case 72 and the ECU board 73 is assembled to a body 11 from below. A combination switch cover 16 is assembled to the body 11.

In this case, first and second steering angle signals, which the first sensing circuit portion 35 and the second sensing circuit portion 36 generate according to rotation of the detection object mechanism portion 34 of the steering angle sensor 17, are processed, similarly to those in the second embodiment.

### Fifth Embodiment

Next, a combination switch module according to the fifth embodiment of the invention is described by referring to FIG. 11.

As shown in FIG. 11, a steering angle sensor 17 used in a combination switch module 80 according to the fifth embodiment is configured so that only a detection object mechanism portion 34 is rotatably attached to a bottom 83a of an ECU board 83 by screwing or snap-fitting, and that the detection obj ect mechanism portion 34 is sandwiched by the ECU board 83 and a combination switch cover 16 and assembled to a body 11.

In the combination switch module 80 according to the fifth embodiment, only the detection object mechanism portion 34 is sandwiched by the ECU board 83 and the combination switch cover 16 and then assembled therein, so that the dedicated case is unnecessary.

In this case, first and second steering angle signals, which a first sensing circuit portion 35 and a second sensing circuit portion 36 generate according to rotation of the detection obj ect mechanism portion 34 of the steering angle sensor 17, are processed, similarly to those in the second embodiment.

Incidentally, the combination switch module according to the invention is not limited to aforementioned embodiments. Appropriate alteration or improvement thereof can be made. For example, a detection object mechanism portion of the main-gear separated type divided into a main gear and a magnet-equipped sub-gear may be used therein. In this case, it is preferable that the main gear and the magnet-equipped sub-gear, which are divided, are accommodated in a case that is the same as a case of the circuit board.

Further, the number of the sensing circuit portions, which generate steering angle signals according to rotation of the detection object mechanism portion, is selected in accordance with an employed angle detection principle. In a case of employing a pair of sensing circuit portions, it may be that one of the sensing circuit portions is used for detecting a coarse angle, and that the other is used for detecting a fine angle. Additionally, the shape of the case is not limited to those shown in the drawings. The shape of the entire case may be rectangular or circular.

As described above, according to the combination switch module of the invention, in the steering angle sensor, the steering angle CPU portion for performing angle computation on outputs of the sensing circuit portions, the steering multiplex communication portion for communicating steering information with an external system by multiplex communication, and the steering angle data storage portion for storing data when no power is supplied are formed in the multiplex communication control unit, the multiplex communication portion, and the data storage portion provided on the ECU board, respectively.

Therefore, each of the multiplex communication control unit, the multiplex communication portion, and the data storage portion , which are provided on the ECU board, is also used as a corresponding one of the steering angle CPU portion, the steeringmultiplex communication portion, and the steering angle data storage portion, which have conventionally been placed on the circuit board of the steering angle sensor. Thus, redundant electronic components are reduced. Hence, the structure of the steering angle sensor is simplified and the miniaturization thereof is achieved by miniaturizing the circuit board accommodated in the upper and lower cases. Consequently, the size and cost of the entire combination switch module can be reduced. Further, a wire harness, which has conventionally been connected directly to the steering angle sensor, is omitted. A wire harness connected to the ECU board can be used in common. Thus, workability at the time of connecting the wire harness thereto can also be enhanced.

Furthermore, according to the combination switch module of the invention, the steering angle sensor employs the detection object mechanism portion attached to the ECU board by screwing or snap-fitting.

Therefore, the detection object mechanism portion is attached directly to the ECU board without using a circuit board, which has conventionally been used in the steering angle sensor. Consequently, the size of the case of the steering angle sensor can be reduced still more.

Further, according to the combination switch module of the second embodiment, in the steering angle sensor accommodated in the dedicated case, the steering angle CPU portion for performing angle computation on outputs of the sensing circuit portions that electrically convert rotation of the detection object mechanism portion, the steering multiplex communication portion for communicating steering information with an external system by multiplex communication, and the steering angle data storage portion for storing data when no power is supplied are formed in the multiplex communication control unit, the multiplex communication portion, and the data storage portion provided on the ECU board, respectively. The sensing circuit portions are also provided on the ECU board.
Therefore, each of the multiplex communication control unit, the multiplex communication portion, and the data storage portion, which are provided on the ECU board, is also used as a corresponding one of the steering angle CPU portion, the steering multiplex communication portion, and the steering angle data storage portion, which have conventionally been placed on the circuit board of the steering angle sensor. Moreover, the sensing circuit portions are also provided on the ECU board. Thus, redundant electronic components are reduced still more. The structure of the steering angle sensor is simplified still more and the miniaturization thereof is achieved by omitting the circuit board of the steering angle sensor. Consequently, the size and cost of the entire combination switch module can be reduced. Furthermore, a wire harness, which has conventionally been connected directly to the steering angle sensor, is omitted. A wire harness connected to the ECU board can be used in common. Thus, workability at the time of connecting the wire harness thereto can also be enhanced.

### Sixth Embodiment

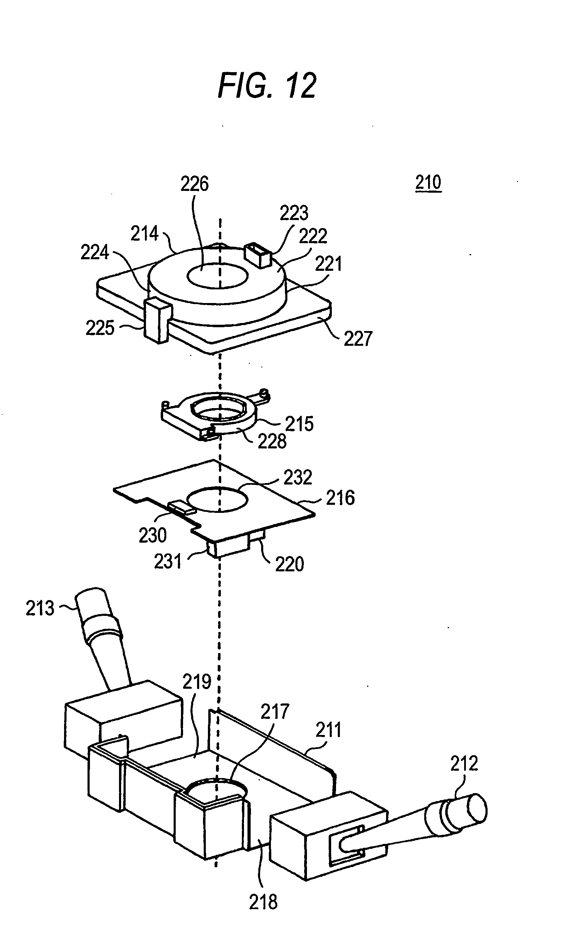

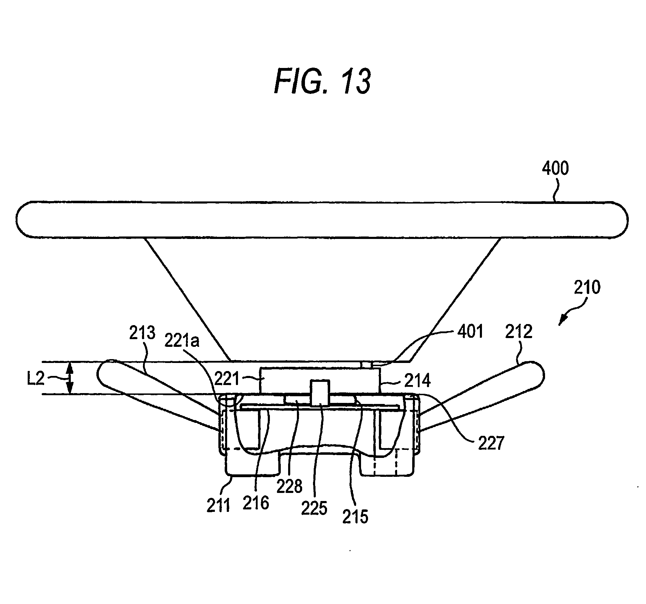

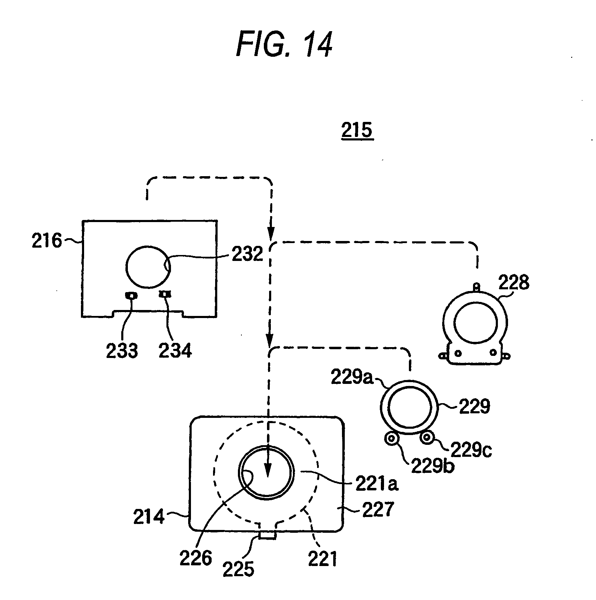

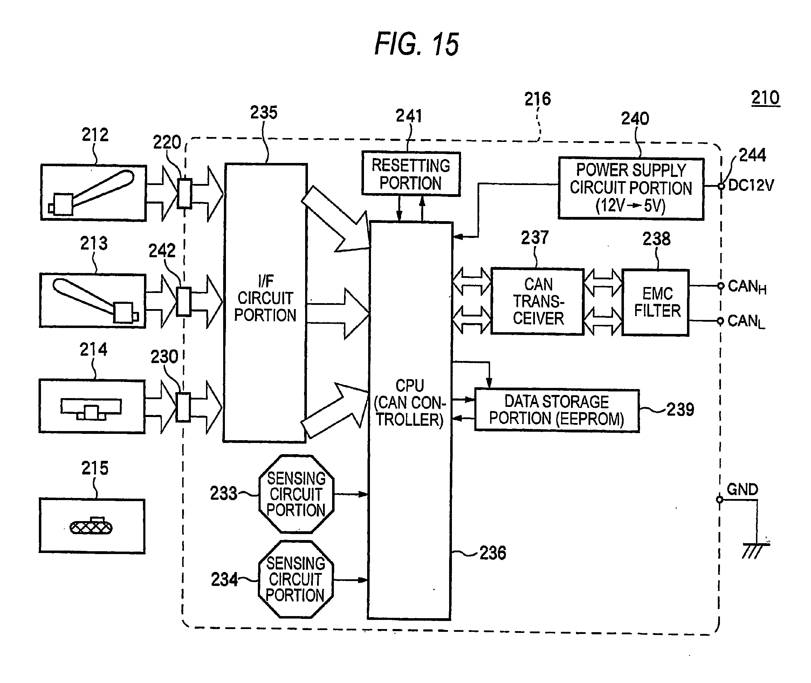

Hereinafter, a mode for carrying out the invention, which is a combination switch module of the invention, is described in detail with reference to FIGS. 12 to 15. FIG. 12 is an external perspective view illustrating the assembly relation among components of a combination switch module according to a sixth embodiment of the invention. FIG. 13 is a partly broken front view illustrating the assembly relation between the combination switch module shown in FIG. 12 and a steering wheel. FIG. 14 is an explanatory view illustrating the assembly of components of a steering angle sensor used in the combination switch module shown in FIG. 12. FIG. 15 is a circuit block view illustrating an ECU board of the combination switch module shown in FIG. 12.

As shown in FIG. 12, a combination switch module 210 according to the sixth embodiment of the invention comprises a body 211, a turn lever unit 212, a wiper lever unit 213, a spiral cable 214 integrally formed with a combination switch cover, a steering angle sensor 215, and an ECU board 216.

The body 211 has a steering-shaft passing portion 217, provided in a central part thereof, for allowing a steering shaft to penetrate therethrough. Further, the body 211 has a first attaching portion 218 for attaching the turn lever unit 212 thereto, and a second attaching portion 219 for attaching the wiper lever unit 213, which are provided at both side portions thereof, respectively. Moreover, the body 211 is fixed to a steering column portion (not shown). The exterior of the body 211 is covered with a column shell (not shown).

The turn lever unit 212 is a unit for controlling a lighting system including a turn signal switch, a lighting switch, a passing switch, a dimmer switch and so on. The turn lever unit 212 is attached to the first attaching portion 218 of the body 211, and connected to a second connector 220 on the ECU board 216.

The wiper lever unit 213 is a unit for controlling a wiping/washing system including a front wiper switch, a front washer switch, a rear wiper switch, a rear washer switch and so on. The wiper lever unit 213 is attached to the second attaching portion 219 of the body 211, and connected to a third connector (shown in FIG. 15) on the ECU board 216.

The spiral cable 214 accommodates a flexible conductive member (not shown) in a spiral cable body 221 thereof. The flexible conductive member is vorticosely formed. An end portion thereof, which is connected to a steering wheel, is disposed in a rotating-side connector 223 placed on a rotating disk 222, while the other end portion thereof, which is connected to the ECU board 216, is disposed in a non-rotating-side connector 225 placed on a non-rotating portion 224. Electrical signals transmitted from to an airbag sensor unit to a driver seat airbag module, those sent from an audio switch provided on the steering wheel, and those sent from a constant-speed running apparatus switch also provided thereon flow through the flexible conductive member. A shaft hole 226, through which the steering shaft is passed, is formed in a central portion of the spiral cable body 221.

Further, the spiral cable 214 is integrally formed with a combination switch cover portion 227 provided on the bottom of the non-rotating portion 224. The combination switch cover portion 227 is shaped like a square plate, which covers an open-side top portion of the body 211, and connected to the top portion thereof by bonding means, such as ultrasonic welding or screwing.

The steering angle sensor 215 stores only a detection obj ect mechanism portion (shown in FIG. 14) 229 in a dedicated case 228. The steering angle sensor 215 is configured so that the detection object mechanism portion 229 is rotatably attached to the top of the ECU board 216 by screwing or snap-fitting. The steering angle sensor 215 is adapted so that the detection object mechanism portion 229 rotates in synchronization with rotation of a steering wheel (shown in FIG. 13) 400, and that thus, the sensor 215 generates an angle signal (an electrical signal) corresponding to a rotation angle of the steering wheel 400. The steering angle sensor 215 stores only the detection object mechanism portion 229 in the dedicated case 228, and does not have a circuit board.

The ECU board 216 has a first connector 230 to which the non-rotating-side connector 225 of the spiral cable 214 is fitted, the second connector 220 to which the turn lever unit 12 is fitted, the third connector 242 to which the wiper lever unit 213 is fitted, and a single fourth connector 231 to which a connector serving as a general connector for external connection and being electrically connected to the combination switch module 210 is connected. The first connector 230 is placed on the top, while the second connector 220, the third connector 242, and the fourth connector 231 are placed on the bottom. A shaft hole 232 corresponding to the steering-shaft passing portion 217 is formed in a central portion of the ECU board 216. The ECU board 216 is accommodated and fixed in the body 211 by being assembled thereto from above. The steering sensor 215 and the spiral cable 214 are stacked on the top of the ECU board 216 in this order.

As shown in FIG. 13, the steering angle sensor 215 is assembled to a bottom 221a of the spiral cable body 221, and connected directly to a rotation-driving pin 401 of a steering wheel 400. Thus, a distance from the steering angle sensor 215 to the steering wheel 400 is set to be L2, which is less than the distance L1 shown in FIG. 17.

As shown in FIG. 14, the steering angle sensor 215 is configured so that the detection object mechanism portion 229 is stored in the dedicated case 228, which stores the detection object mechanism portion 229 and is assembled onto the ECU board 216. Further, the ECU board 216, on the top of which the steering angle sensor 215 is placed, is assembled to the bottom 221a of the spiral cable body 221. The detection object mechanism portion 229 comprises a main gear 229a, which is caused by rotation of the steering wheel 400 to rotate in synchronization of the steering wheel 400, and two magnet-equipped sub-gears 229b and 229c, which are meshed with the main gear 229a. The electronic components provided in the conventional steering angle sensor, such as the circuit board (corresponding to the circuit board 114 shown in FIG. 19), the steering angle CPU portion (corresponding to the steering angle CPU portion 115 shown in FIG. 19), the steering multiplex communication portion (corresponding to the steering multiplex communication portion 116), and the steering angle data storage portion (corresponding to the steering angle data storage portion 120 shown in FIG. 19) are omitted in the steering angle sensor 215. Therefore, the steering angle sensor 215 is provided with no circuit board, and has an outer shape, which is far smaller than that of the conventional steering angle sensor.

As shown in FIG. 15, a first sensing circuit portion 233, a second sensing circuit portion 234, an I/F circuit portion (interface circuit portion) 235, a multiplex communication control unit (CPU (CAN controller)) 236, a multiplex communication portion (CAN transceiver) 237, an EMC filter 238, a data storage portion 239, a power supply circuit portion 240, and a resetting portion 241 are placed on the ECU board 216.

The first sensing circuit portion 233 generates a first steering angle signal by utilizing a magnetic force produced during rotation of one of the magnet-equipped sub-gears 229b of the detection object mechanism portion 229. The first steering angle signal is inputted to the multiplex communication control unit 236. The second sensing circuit portion 234 generates a second steering angle signal by utilizing a magnetic force produced during rotation of the other magnet-equipped sub-gear 229c of the detection object mechanism portion 229. The second steering angle signal is inputted to the multiplex communication control unit 236.

Electrical signals sent through the second connector 220 from the turn lever unit 212, those sent through the third connector 242 from the wiper lever unit 213, and those flowing in the spiral cable 214 through the first connector 230 are inputted to the I/F circuit portion 235, which performs conversion processing on each of the electrical signals and outputs the converted electrical signals.

The multiplex communication control unit 236 performs computation on electrical signals supplied from the turn lever unit 212 thereto and processes the electrical signals into information signals and transmits the information signals to the multiplex communication portion 237. Also, the multiplex communication control unit 236 performs computation on electrical signals supplied from the wiper lever unit 213 thereto and processes the electrical signals into information signals, and transmits the information signals to the multiplex communication portion 237. The multiplex communication control unit 236 performs computation on electrical signals, which flow though the spiral cable 214, and processes the electrical signals into information signals, and transmits the information signals to the multiplex communication portion 237. Furthermore, the multiplex communication control unit 236 functions as the steering angle CPU portion that performs computation on a first steering angle signal and a second steering angle signal respectively supplied by the first sensing circuit 233 and the second sensing circuit 234 of the steering angle sensor 215, that processes the first and second steering angle signals into information signals, and that transmits the information signals to the multiplex communication portion 237.

The multiplex communication portion 237 performs transmission or reception of information signals corresponding to the turn lever unit 212, those corresponding to the wiper lever unit 213, those corresponding to the spiral cable 214, which are supplied from the multiplex communication control unit 236, to or from an external system by utilizing (Controller Area Network) multiplex communication. Furthermore, the multiplex communication portion 237 functions as a steering multiplex communication portion for performing transmission or reception of a first steering angle information signal and a second steering angle information signal, which are supplied from the multiplex communication control unit 236 and correspond to the steering angle sensor 215, to or from an external system.

The EMC filter 238 is an electromagnetic compatibility filter and performs radiation noise prevention processing on each digitalized information signal to be transmitted from the multiplex communication portion 41. The information signals processed by the EMC filter 238 are transmitted from and received at a first output terminal CAN_{H} and a second output terminal CAN_{L} by multiplex communication.

The data storage portion 239 is a nonvolatile semiconductor memory (EEPROM) and holds and stores operation parameters, communication information and the like, which are represented by an information signal corresponding to the turn lever unit 212, an information signal corresponding to the wiper lever unit 213, and an information signal corresponding to a spiral cable 214, when no electric power is supplied. Furthermore, the data storage portion 239 functions as a steering angle data storage portion for temporarily holding and storing first and second steering angle information signals when a no-power-supply state occurs during the first and second steering angle information signals, which are sent from the steering angle sensor 215, are processed.

The power supply circuit portion 240 regulates a DC voltage of 12 V, which is supplied from the power supply or an ignition terminal, to a voltage of 5 V for driving the multiplex communication control unit 236.

The resetting portion 241 monitors whether or not a runaway of the multiplex communication control unit 236 occurs, and whether or not a low-voltage condition of the power supply occurs. If necessary, the resetting portion 241 resets the multiplex communication control unit 236.

According to the combination switch module 210 of this embodiment, in the steering angle sensor 215, the steering angle CPU portion for performing angle computation on outputs of the first sensing circuit portion 233 and the second sensing circuit portion 234, the steering multiplex communication portion for communicating steering information with an external system by multiplex communication, and the steering angle data storage portion for storing data when no power is supplied are formed in the multiplex communication control unit 236, the multiplex communication portion 237,and the data storage portion 239 provided on the ECU board 216, respectively. The first sensing circuit portion 233 and the second sensing circuit portion 234 are also provided on the ECU board 216, which is attached to the spiral cable body 221. Further, the detection object mechanism portion 229 attached to the ECU board 216 by screwing or snap-fitting is used in the steering angle sensor 215. Furthermore, the detection object mechanism portion 229 is accommodated in the dedicated case 228, which is placed between the bottom of the spiral cable body 221 and the ECU board 216. Additionally, the spiral cable body 221 has the function of a combination switch cover.
Therefore, each of the multiplex communication control unit 236, the multiplex communication portion 237, and the data storage portion 239, which are provided on the ECU board 216, is also used as a corresponding one of the steering angle CPU portion, the steering multiplex communication portion, and the steering angle data storage portion, which have conventionally been placed on the circuit board of the steering angle sensor. Moreover, the first sensing circuit portion 233 and the second sensing circuit portion 234 are also provided on the ECU board 216. Thus, redundant electronic components are reduced. Hence, the structure of the steering angle sensor 215 is simplified and the miniaturization thereof is achieved by omitting the circuit board of the steering angle sensor 215. Consequently, the size and cost of the entire combination switch module 210 can be reduced. Further, the ECU board 216 is attached to the spiral cable body 21, so that the first sensing circuit portion 233 and the second sensing circuit portion 234 become closer to the steering wheel 400. Thus, error factors, such as eccentricity and backlash of the rotating portion, can be eliminated. Consequently, a practical rotation angle of the steering wheel 400 is obtained, so that accurate rotation data can be obtained. Furthermore, a wire harness, which has conventionally been connected directly to the steering angle sensor, is omitted. A wire harness connected to the ECU board 216 can be used in common. Thus, workability at the time of connecting the wire harness thereto can also be enhanced.

Additionally, the detection object mechanism portion 229 is attached directly to the ECU board 216 without using the circuit board conventionally provided in the steering angle sensor. Consequently, the case 228, which is exclusively used for the steering angle sensor 215, can be miniaturized still more.
Further, in the spiral cable body 221 connected to the steering wheel 400, the detection object mechanism portion 229 is disposed at the closest place to the steering wheel 400. Thus, the detection object mechanism portion 229, which rotates in synchronization with rotation of the steering wheel 400, is connected directly to the steering wheel 400 without an intervening component. Consequently, a practical rotation angle of the steering wheel 400 can be obtained.
Furthermore, as compared with the combination switch module in which the spiral cable body and the combination switch cover are formed separately from each other, the management of components can be simplified. Moreover, the spiral cable body and the combination switch cover can be made at a time by using a single die. Thus, productivity thereof can be enhanced.

Incidentally, the combination switch module according to the invention is not limited to aforementioned embodiment. Appropriate alteration or improvement thereof can be made. For example, a detection object mechanism portion of the main-gear separated type divided into a main gear and a magnet-equipped sub-gear may be used therein.
Further, the number of the sensing circuit portions, which generate steering angle signals according to rotation of the detection object mechanism portion, is selected in accordance with an employed angle detection principle. In a case of employing a pair of sensing circuit portions, it may be that one of the sensing circuit portions is used for detecting a coarse angle, and that the other is used for detecting a fine angle.
Additionally, the shape of the case is not limited to those shown in the drawings. The shape of the entire case may be rectangular or circular.

As described above, according to the combination switch module of the invention, in the steering angle sensor, the steering angle CPU portion for performing angle computation on outputs of the sensing circuit portions, the steering multiplex communication portion for communicating steering information with an external system by multiplex communication, and the steering angle data storage portion for storing data when no power is supplied are formed in the multiplex communication control unit, the multiplex communication portion, and the data storage portion provided on the ECU board, respectively. Additionally, the sensing circuit portions are provided on the ECU board, which is attached to the spiral cable body.
Therefore, each of the multiplex communication control unit, the multiplex communication portion, and the data storage portion , which are provided on the ECU board, is also used as a corresponding one of the steering angle CPU portion, the steeringmultiplex communication portion, and the steering angle data storage portion, which have conventionally been placed on the circuit board of the steering angle sensor. Moreover, the sensing circuit portions are provided on the ECU board. Thus, redundant electronic components can be reduced. Additionally, a circuit board of the steering angle sensor can be omitted. Hence, the structure of the steering angle sensor can be simplified and the miniaturization thereof can be achieved. Further, the ECU board is attached to the spiral cable body, so that the sensing circuit portions become closer to the steering wheel. Thus, error factors, such as eccentricity and backlash of the rotating portion, can be eliminated. Consequently, a practical rotation angle of the steering wheel is obtained. Hence, accurate rotation data can be obtained. Furthermore, a wire harness, which has conventionally been connected directly to the steering angle sensor, is omitted. A wire harness connected to the ECU board can be used in common. Thus, workability at the time of connecting the wire harness thereto can also be enhanced.

Further, according to the combination switch module of the invention, the steering angle sensor employs the detection obj ect mechanism portion attached to the ECU board by screwing or snap-fitting.
Therefore, the detection object mechanism portion is attached directly to the ECU board without using a circuit board, which has conventionally been used in the steering angle sensor. Consequently, the size of the dedicated case of the steering angle sensor can be reduced still more.

Furthermore, according to the combination switch module of the invention, the detection object mechanism portion is accommodated in the dedicated case placed between the bottom of the spiral cable body and the ECU board.
Therefore, in the spiral cable body connected to the steering wheel, the detection object mechanism portion is disposed at the closest place to the steering wheel. Thus, the detection object mechanism portion, which rotates in synchronization with rotation of the steeringwheel, is connected directly to the steering wheel without an intervening component. Consequently, a practical rotation angle of the steering wheel can be obtained.

Additionally, the combination switch module of the invention, the spiral cable body has the function of a combination switch cover.
Therefore, as compared with the combination switch module in which the spiral cable body and the combination switch cover are formed separately from each other, the management of components can be simplified. Moreover, the spiral cable body and the combination switch cover can be made at a time by using a single die. Thus, productivity thereof can be enhanced.

## Claims

1. A combination switch module (10; 50; 60; 70; 80; 210) comprising:
a body (11; 211) through which a steering shaft penetrated;
a lever switch unit (12, 13; 212; 213) assembled to the body;
a sensing circuit portion (35, 36; 233, 234) for converting a rotation of the detection object mechanism portion into an electric signal; and an ECU board (15; 216);
**characterized by**
a spiral cable body (21; 221) incorporating a spiral cable (14; 214) assembled to the body;
a steering angle sensor (17; 215) including a case and a detection object mechanism portion adapted to rotate in synchronization with rotation of the steering shaft which are accommodated in the case;
the ECU board (15; 216) including,
a multiplex communication control unit (40; 236) which performs computation processing on information sent from the lever switch unit and from the spiral cable (214) and functions as a steering angle CPU portion (115) for performing angle computation based on the electrical signal output from the sensing circuit portion (35, 36; 233, 234);
a multiplex communication portion (41; 237) which performs transmission of information to and reception of information from an external system and functions as a steering multiplex communication portion (116) for communicating steering information with the external system by multiplex communication, and
a data storage portion (43; 239) which stores data for the transmission and data obtained by the reception and functions as a steering angle data storage portion for storing data when electric power is not supplied.

2. The combination switch module (10; 50; 60; 70; 80; 210) according to claim 1,
**characterized in that**
the sensing circuit portion (35; 36; 233; 234) is formed on a circuit board (38) accommodated in the case.

3. The combination switch module (10; 50; 60; 70; 80; 210) according to claim 2,
**characterized in that**
the case includes upper and lower case which accommodate the detection object mechanism portion (23) and the circuit board (38).

4. The combination switch module (10; 50; 60; 70; 70; 210) according to claim 1,
**characterized in that**
the case (51, 52) accommodates the detection object mechanism portion (34) only.

5. The combination switch module (10; 50; 60; 70; 80; 210) according to claim 4,
**characterized in that**
the sensing circuit portion (35; 36; 233; 234) is formed on the ECU board (15; 216).

6. The combination switch module (10; 50; 60; 70; 80; 210) according to claim 4,
**characterized in that**
the detection object mechanism portion (34) is attached to the ECU board (15, 53; 63; 73; 216) through the case (51, 52; 62; 72) by screwing or snap-fitting.

7. The combination switch module (10; 50; 60; 70; 80; 210) according to claim 4,
**characterized in that**
the case is interposed between the spiral cable body (21; 221) and the ECU board (15; 216).

8. The combination switch module (10; 50; 60; 70; 80; 210) according to claim 1,
**characterized in that**
the spiral cable body (21; 221) has a function of covering an opening of the body (11; 211).

## Patentansprüche

1. Kombinationsschaltermodul (10; 50; 60; 70; 80; 210) umfassend
einen Körper (11; 211), durch den eine Lenksäule hindurchtritt,
eine Hebelschaltereinheit (12; 13; 212; 213), die an dem Körper montiert ist,
einen Sensorschaltkreisabschnitt (35; 36; 233; 234) zum Konvertieren einer Rotation des Erfassungsmechanismus in ein elektrisches Signal, und eine ECU-Leiterplatte (Steuergeräteplatte) (15; 216)
**gekennzeichnet durch**
einen Spiralkabelkörper (21; 221), der ein Spiralkabel (14; 214) umfasst, das an dem Körper montiert ist,
einen Lenkwinkelsensor (17; 215), der ein Gehäuse und einen Erfassungsmechanismus umfasst, der so ausgebildet ist, dass er mit der Rotation der Lenksäule synchron rotiert, die in dem Gehäuse aufgenommen sind,
die ECU-Leiterplatte (15; 216), die
eine Multiplexkommunikationssteuereinheit (40; 236), die die Rechenverarbeitung von Informationen, die von der Hebelschaltereinheit und von dem Spiralkabel (214) abgegeben werden, ausführt und als ein Lenkwinkel-CPU-Abschnitt (115) zur Winkelberechnung, basierend auf der Ausgabe des elektrischen Signals des Sensorschaltkreisabschnitts (35; 36; 233; 234), dient,
einen Multiplexkommunikationsabschnitt (41; 237), der die Übermittlung der Informationen an ein und den Empfang von Informationen von einem externen System ausführt und als ein Lenkmultiplexkommunikationsabschnitt (116) zum Austausch von Lenkinformationen mit dem externen System mittels Multiplexkommunikation dient, und
einen Datenspeicherabschnitt (43; 239), der Daten zur Übermittlung und Daten, die empfangen wurden, speichert und als ein Lenkwinkeldatenspeicherabschnitt zum Speichern von Daten, wenn kein elektrischer Strom zugeführt wird, dient.

2. Kombinationsschaltermodul (10; 50; 60; 70; 80; 210) gemäß Anspruch 1,
**dadurch gekennzeichnet,**
**dass** der Sensorschaltkreisabschnitt (35; 36; 233; 234) auf einer Schaltkreisplatte (38) ausgebildet ist, die in dem Gehäuse aufgenommen ist.

3. Kombinationsschaltermodul (10; 50; 60; 70; 80; 210) gemäß Anspruch 2,
**dadurch gekennzeichnet,**
**dass** das Gehäuse ein oberes und ein unteres Gehäuse umfasst, die den Erfassungsmechanismus (23) und die Schaltkreisplatte (38) aufnehmen.

4. Kombinationsschaltermodul (10; 50; 60; 70; 80; 210) gemäß Anspruch 1,
**dadurch gekennzeichnet,**
**dass** das Gehäuse (51; 52) nur den Erfassungsmechanismus (34) aufnimmt.

5. Kombinationsschaltermodul (10; 50; 60; 70; 80; 210) gemäß Anspruch 4,
**dadurch gekennzeichnet,**
**dass** der Sensorschaltkreisabschnitt (35; 36; 233; 234) auf der ECU-Leiterplatte (15; 216) ausgebildet ist.

6. Kombinationsschaltermodul (10; 50; 60; 70; 80; 210) gemäß Anspruch 4,
**dadurch gekennzeichnet,**
**dass** der Erfassungsmechanismus (34) an der ECU-Leiterplatte (15; 53; 63; 73; 216) mittels des Gehäuses (51; 52: 62; 72) durch Verschrauben oder Einschnappen befestigt ist.

7. Kombinationsschaltermodul (10; 50; 60; 70; 80; 210) gemäß Anspruch 4,
**dadurch gekennzeichnet,**
**dass** das Gehäuse zwischen dem Spiralkabelkörper (21; 221) und der ECU-Leiterplatte (15; 216) angeordnet ist.

8. Kombinationsschaltermodul (10; 50; 60; 70; 80; 210) gemäß Anspruch 1,
**dadurch gekennzeichnet,**
**dass** der Spiralkabelkörper (21; 221) zur Abdeckung einer Öffnung des Körpers (11; 211) dient.

## Revendications

1. Module de commutateur de combinaison (10; 50 ; 60 ; 70 ; 80 ; 210) comprenant :
un corps (11 ; 211) à travers lequel un arbre de direction pénètre,
une unité de commutateur de levier (12, 13 ; 212, 213) montée sur le corps,
une partie de circuit de détection (35, 36 ; 233, 234) destinée à convertir une rotation de la partie de mécanisme d'objet de détection en un signal électrique, et une carte d'unité ECU (15 ; 216),
**caractérisé par**
un corps de câble en spirale (21 ; 221) incorporant un câble en spirale (14 ; 214) monté sur le corps,
un capteur d'angle de direction (17 ; 215) comprenant un boîtier et une partie de mécanisme d'objet de détection conçue pour tourner en synchronisme avec la rotation de l'arbre de direction, lesquels sont reçus dans le boîtier,
la carte d'unité ECU (15 ; 216) comprenant,
une unité de commande de communication multiplexée (40 ; 236) qui réalise un traitement de calcul sur des informations émises depuis l'unité de commutateur de levier et depuis le câble en spirale (214) et fonctionne comme une partie d'unité UC d'angle de direction (115) pour réaliser un calcul d'angle sur la base du signal électrique fourni en sortie de la partie de circuit de détection (35, 36 ; 233, 234),
une partie de communication multiplexée (41 ; 237) qui exécute une émission des informations vers un système externe ainsi qu'une réception des informations provenant de celui-ci et fonctionne comme une partie de communication multiplexée de direction (116) destinée à communiquer des informations de direction avec le système externe par le biais d'une communication multiplexée, et
une partie de mémorisation de données (43 ; 239) qui mémorise des données pour l'émission et des données obtenues par la réception et fonctionne comme une partie de mémorisation de données d'angle de direction destinée à mémoriser des données lorsqu'une puissance électrique n'est pas fournie.

2. Module de commutateur de combinaison (10 ; 50 ; 60 ; 70 ; 80 ; 210) selon la revendication 1,
**caractérisé en ce que**
la partie de circuit de détection (35 ; 36 ; 233 ; 234) est formée sur une carte de circuit (38) reçue dans le boîtier.

3. Module de commutateur de combinaison (10 ; 50 ; 60 ; 70 ; 80 ; 210) selon la revendication 2,
**caractérisé en ce que**
le boîtier comprend un boîtier supérieur et un boîtier inférieur qui logent la partie de mécanisme d'objet de détection (23) et la carte de circuit (38).

4. Module de commutateur de combinaison (10 ; 50 ; 60 ; 70 ; 80 ; 210) selon la revendication 1,
**caractérisé en ce que**
le boîtier (51, 52) loge la partie de mécanisme d'objet de détection (34) uniquement.

5. Module de commutateur de combinaison (10 ; 50 ; 60 ; 70 ; 80 ; 210) selon la revendication 4,
**caractérisé en ce que**
la partie de circuit de détection (35 ; 36 ; 233 ; 234) est formée sur la carte d'unité ECU (15 ; 216).

6. Module de commutateur de combinaison (10 ; 50 ; 60 ; 70 ; 80 ; 210) selon la revendication 4,
**caractérisé en ce que**
la partie de mécanisme d'objet de détection (34) est fixée à la carte d'unité ECU (15, 53 ; 63 ; 73 ; 216) par l'intermédiaire du boîtier (51, 52 ; 62 ; 72) par vissage ou encliquetage.

7. Module de commutateur de combinaison (10 ; 50 ; 60 ; 70 ; 80 ; 210) selon la revendication 4,
**caractérisé en ce que**
le boîtier est interposé entre le corps de câble en spirale (21 ; 221) et la carte d'unité ECU (15 ; 216).

8. Module de commutateur de combinaison (10 ; 50 ; 60 ; 70 ; 80 ; 210) Selon la revendication 1,
**caractérisé en ce que**
le corps de câble en spirale (21 ; 221) présente une fonction de protection d'une ouverture du corps (11 ; 211).
